# EUROPEAN PATENT SPECIFICATION

(11) **EP 4 172 510 B1**
(45) Date of publication and mention of the grant of the patent: **30.07.2025**
(21) Application number: 21735693.0
(22) Date of filing: 24.06.2021
(51) Int. Cl.: F16D 55/22, F16D 65/54, F16D 121/04, F16D 127/02

(54) **VEHICLE BRAKE SYSTEM**
FAHRZEUGBREMSSYSTEM
SYSTÈME DE FREINAGE DE VÉHICULE

(30) Priority: 24.06.2020 NL 2025910
(43) Date of publication of application: 03.05.2023
(73) Proprietor: Lightyear IPCo B.V., 5708 JZ Helmond (NL)
(72) Inventor: VAN DE VORST, Jaap, 6512 ED NIJMEGEN (NL); GROOTEN, Roeland, Joost, 4121 KH EVERDINGEN (NL); DIJKEN, Durandus, Kornelius, 5644 TP EINDHOVEN (NL)
(74) Representative: EP&C
(86) International application number: PCT/EP2021/067314
(87) International publication number: WO 2021/260095

(56) References cited:
- EP-A2- 0 068 613
- DE-A1- 1 505 269
- US-A- 3 113 646
- US-A- 3 200 911

## Description

The invention pertains to a vehicle brake system, to a vehicle comprising a vehicle brake system and to a trailer comprising a vehicle brake system.

The project leading to this application has received funding from the European Union's Horizon 2020 research and innovation program under grant agreement No. 848620.

In known vehicle brake systems, in order to brake the vehicle a brake pad is forced against a body, e.g. a brake disk, which rotates along with a wheel of the vehicle. Due to the friction between the brake pad and the body, the wheel is slowed down. Therewith, also the vehicle slows down or even comes to a full stop. It is known to move the brake pad to the body by means of a piston, e.g. a hydraulic piston, when the vehicle brake is applied and to move the brake pad away from the body by a spring, e.g. a Belleville spring, when the vehicle brake is released.

This known system has several problems. The first problem is associated with the wear of the brake pad and/or of the body. The brake pad is usually moved towards and against the brake disk by means of a piston. When the brake pad and/or the body wear, the stroke over which the brake pad has to travel before it contacts the body increases. Therewith, the driver experiences that the brake pedal has to be pushed further down before the brakes engage. This may pose a safety risk.

A further problem is that the return stroke of the brake pad away from the body when the brake is released is often not fully executed, e.g. due to the accumulation of dirt in the brake system. This may cause the brake pad to still slightly engage the body during normal running of the vehicle, even when the brake is not applied. This causes friction between the brake pad and the body during the running of the vehicle, which leads to increased power consumption or fuel consumption. In particular for highly efficient cars, electric cars, in particular electric cars that are at least partly charged by solar power, this additional friction is undesired as it reduces the power efficiency of the vehicle, and therewith it reduces the range that can be travelled on a single charge of the batteries.

US3200911 discloses a brake system in which each wheel brake cylinder is provided with an adjuster which includes a spring acting upon an abutment movable with respect to the piston whereby inward movement of the piston into its respective cylinder beyond a desired normal position is resisted by the spring and when the pressure urging the piston inwardly is removed, the spring will act to automatically remove the piston to its normal position.

US 3113646 discloses a brake system in which normally, under operation, the braking elements are actuated within the predetermined limits or clearance space until such time as the brake wear becomes so great that the brake will not set up tightly within the predetermined limits of movement. Under such conditions, the actuating pressure applied to the brake piston causes relative movement beyond the predetermined limits as the result of exerting a force which is greater than the friction holding force applied to the auxiliary piston. The auxiliary piston is then moved to take up for the brake wear, and upon release of the brake, the piston will again be withdrawn by means of a compression spring to again establish the operation with normal brake clearance.

DE1505269 discloses a system that is similar to the system of US 3113646, and which is provided with an anti knock back system.

EP0068613 discloses a sliding-caliper disc brake assembly includes grip-and-slip retraction and knockback control mechanism, involving a spring washer and a friction ring, effective between the caliper piston and the caliper housing, and additionally grip-and-slip retraction and knockback control mechanism, involving a spring washer and a friction ring, effective between the caliper housing and a fixed mounting bolt for the caliper, to provide zero brake lining drag in the brake-released condition, without undue lost pedal travel.

GB 983102 discloses a brake system which comprises a brake pad and a brake disk. When the brake is engaged, the brake pad is moved into contact with the brake disk by a hydraulic piston. A Belleville spring is arranged in the piston. When the brake pad is forced against the brake disk, the Belleville spring is flattened. When the brake is released, the hydraulic pressure on the piston drops, and the Belleville spring restores its original conical shape, therewith retracting the brake pad from the brake disk. The length of the return stroke of the piston with the brake pad therefore is determined by the Belleville spring, with the endpoint of the return stroke of the piston being reached when the Belleville spring is in its unloaded, entirely relaxed state.

In case wear of the brake pad and/or brake disk occurs in the brake system of GB 983102, the Belleville spring is not only flattened when the brake is engaged, but also moved towards the brake disk to a new position. In this new position, the Belleville spring again relaxes to withdraw the piston with the brake pad when the hydraulic pressure on the piston drops when the brake is released. The length of the return stroke remains the same as before, because the length of the return stroke is determined by the fully relaxed length of the Belleville spring.

Although the known brake system of GB 983102 is designed to keep the stroke of the brake pad constant despite wear of the brake pad and/or brake disk, this system has several problems with respect to the predictability of the system for the driver. The Belleville spring does not work linearly over its range of motion between fully relaxed and fully compressed. Therewith, the force that the driver experiences over the downward stroke of the brake pedal will vary. In addition, because the length of the stroke of the piston is rather short, the chance that the brake pad will touch the brake disk during normal non-braked running of the vehicle is significant. This problem is increased when dirt like mud or rust accumulates in the brake system.

The invention aims to provide an improved vehicle brake system, which reacts to the actions by the driver and/or by a brake related driver assistance system (such as a brake booster, ABS/ESP system, adaptive cruise control, automated emergency braking), in a way that is predictable.

This object is obtained by a vehicle brake system, which comprises:
- a frame,
- a brake pad, which is moveable relative to the frame between a braking position and a retracted position,
- a piston device is moveable over an operational stroke to move the brake pad from the retracted position into the braking position, which piston device comprises a first engagement surface,
- a retractor which is adapted to move the piston device over a return stroke, thereby moving the brake pad from the braking position into the retracted position,
- a stop which is in engagement with the first engagement surface of the piston device at the end of the return stroke, which stop is arranged to prevent movement of the first engagement surface past the stop in the direction of the return stroke, and
wherein the stop is moveable by the piston device in the direction of the operational stroke of the piston device.

In the vehicle brake system according to the invention, a brake pad is present which is moveable relative to a frame. The frame is for example a brake caliper or a part thereof. The brake pad is moveable relative to the frame between a braking position and a retracted position.

In the braking position, the vehicle brake system is active, so the wheel that is associated with the vehicle brake system is subjected to a braking action. In the braking position, the brake pad is for example positioned to engage a brake disk or other rotatable wheel part which rotates along with the wheel. In case an in-wheel electrical motor is used to drive the wheel on which the vehicle brake system is arranged to operate, in the braking position, the brake pad is for example positioned to engage a rotor of the in-wheel motor.

In the retracted position, the vehicle brake system is not active, so the wheel that is associated with the vehicle brake system is not subjected to a braking action. In the retracted position, the brake pad is at the largest distance from the brake disk or other rotatable wheel part that the brake pad engaged when the brake pad is in the braking position. So, if the total distance that the brake pad travels from the braking position away from the brake disk or other rotatable wheel part of the wheel with which the vehicle brake system is associated is referred to as the brake pad stroke, the braking position and the retracted position are located at opposite ends of the brake pad stroke. The brake pad does not travel further away from the brake disk or rotatable wheel part than the retracted position. Any position of the brake pad between the braking position and the retracted position is referred to as an "intermediate position" of the brake pad.

The vehicle brake system according to the invention further comprises a piston device. The piston device is or comprises for example a hydraulic piston, a hydraulic piston with a piston rod, a pneumatic piston, a pneumatic piston with a piston rod, a magnetically operated piston, a magnetically operated piston with a piston rod, a piston which is driveable by a linear motor, or a combination of a piston and piston rod which is driven by a linear motor.

The piston device is moveable over an operational stroke to move the brake pad from the retracted position into the braking position. Optionally, the piston device is connected to the brake pad. The operational stroke of the piston device may extend parallel or even coaxial with the brake pad stroke, or the operational stroke of the piston device may extend at an angle relative to the brake pad stroke. The operational stroke of the piston device may have the same length or a different length than the brake pad stroke. The operational stroke of the piston device has a start point and an end point. If the piston device is located somewhere between the start point and the end point of the operational stroke, it is in an intermediate position.

The piston device comprises a first engagement surface. The first engagement surface is for example located at a piston or at a piston rod of the piston device.

The vehicle brake system according to the invention further comprises a retractor which is adapted to move the piston device over a return stroke, thereby moving the brake pad from the braking position into the retracted position. The return stroke of the piston device has a start point and an end point. If the piston device is located somewhere between the start point and the end point of the return stroke, it is in an intermediate position. The retractor is or comprises for example one or more springs and/or one or more magnets, and/or functions hydraulically. The retractor may for example engage the brake pad and/or the piston device.

The vehicle brake system according to the invention further comprises a stop. This stop is in engagement with the first engagement surface of the piston device at the end of the return stroke, so the position the piston device is in when the brake pad is in the retracted position. The stop is arranged to prevent movement of the first engagement surface past the stop in the direction of the return stroke.

The stop is moveable by the piston device in the direction of the operational stroke of the piston device.

The stop optionally comprises a first stop surface and a second stop surface. If present, the first stop surface is arranged to engage the first engagement surface of the piston device.

In the vehicle brake system according to the invention, it is the stop which determines the location of the end point of the return stroke of the piston device, instead of that the length of the return stroke is determined by the retractor as in the prior art. Therewith, in the vehicle brake system according to the invention, non-linear or other suboptimal parts in the range of motion of the retractor can be avoided. As in the vehicle brake system of the invention, the length of the return stroke is dependent from the position of the stop instead of from the behavior, e.g. the dynamic behavior, of the retractor, the vehicle brake system behave in a more predictable manner for the driver and/or for the driver assistance system (such as a brake booster, ABS/ESP system, adaptive cruise control, automated emergency braking) of the vehicle which contains the vehicle brake system.

Furthermore, that the stop is in engagement with the first engagement surface of the piston device at the end of the return stroke makes that the retracted position of the brake pad is accurately defined, as the deformation of the brake pad due to the piston device being located, and optionally forced, against the stop is minimal. If a stop would be used which would be at a different location, the brake pad may be subjected to bending, which may cause the brake pad to bulge out towards the brake disk or other rotatable part of the wheel that is associated with the vehicle brake system, which in turn may lead to contact and friction between the brake pad and the brake disk or other rotatable part of the wheel that is associated with the vehicle brake system. This problem is significantly reduced by making that the stop is in engagement with the first engagement surface of the piston device at the end of the return stroke.

In addition, the stop being moveable in the direction of the operational stroke of the piston device allows the length of the return stroke to be kept constant, even in case of wear of the brake pad, and optionally of any brake disk or other rotatable wheel part which with the vehicle brake system cooperates. This further contributes to the predictable behavior of the brake system.

The stop being moveable by the piston device in the direction of the operational stroke of the piston device makes that the displacement of the stop, which serves to compensate for wear of e.g. the brake pad, is accurately adapted to the amount of wear on e.g. the brake pad. In a vehicle brake system, large forces may occur during braking, leading to significant deformation of parts of the vehicle brake system. By moving the stop directly by the piston device, the distance over which the stop is moved to compensate for the wear is closely linked to the additional distance the piston device has to travel in the operational stroke to bring the brake pad into the braking position. There will be little influence from deformation of brake system parts between the brake pad and the stop, as there generally are not many parts present between the brake pad and the piston device. This further contributes to the predictable behavior of the brake system.

In an embodiment of the vehicle brake system according to the invention, the piston device further comprises a second engagement surface. The second engagement surface is adapted to engage the stop at the end of the operational stroke. At the end of the operational stroke of the piston device, the brake pad is in the braking position.

The second engagement surface is arranged at a distance from the first engagement surface.

The second engagement surface allows to further control the length of the operational stroke of the piston independent of the retractor.

Optionally, the distance between the first engagement surface and the second engagement surface is equal to the length of the return stroke. Alternatively, the distance between the first engagement surface and the second engagement surface is equal to the length of the return stroke plus a predetermined run-in allowance. Alternatively, the distance between the first engagement surface and the second engagement surface is equal to the length of the return stroke plus the distance between the location on the stop where the first engagement surface contacts the stop and the location on the stop where the second engagement surface contacts the stop, this distance being measured in the direction of the return stroke.

In a variant of this embodiment, the stop is moveable by the second engagement surface of the piston device in the direction of the operational stroke when the operational stroke is longer than the return stroke.

The operational stroke being longer than the return stroke may occur due to wear of the brake pad and/or any brake disk or other rotatable wheel part with which the vehicle brake system cooperates during use. Due to this wear, the brake pad has to be moved further before it engages any brake disk or other rotatable wheel part with which the vehicle brake system cooperates during use.

When the distance between the first engagement surface and the second engagement surface is equal to the length of the return stroke, the second engagement surface of the piston device engages the stop during the operational stroke at the point when the piston device has travelled over the length of the return stroke. When the operational stroke is longer than the return stroke, in this variant the second engagement surface from that point on picks up the stop and moves it along until the brake pad has reached its braking position, i.e. until the piston device has reached the end of its operational stroke. When the driver or brake related the driver assistance system (such as a brake booster, ABS/ESP system, adaptive cruise control, automated emergency braking) releases the brake, the retraction means move the brake pad back into the retracted position and the piston device is moved over the return stroke. Because the stop has now been moved by the secondary engagement surface, the length of the return stroke is the same as it was before.

In an embodiment of this variant, the distance between the first engagement surface and the second engagement surface is equal to the length of the return stroke plus a predetermined run-in allowance. In this case, the secondary engagement surface only moves the stop when the length of the operational stroke is equal to the length of the return stroke plus the predetermined run-in allowance, for example when the wear of the brake pad and/or any brake disk or other rotatable wheel part with which the vehicle brake system cooperates during use has exceeded the predetermined run-in allowance.

In an embodiment of the vehicle brake system according to the invention, the stop optionally comprises a first stop surface and a second stop surface. The first stop surface is arranged to engage the first engagement surface of the piston device. The second stop surface is arranged to engage the second engagement surface of the piston device if such a second engagement surface is present on the piston device.

Optionally, the distance between the first engagement surface and the second engagement surface is equal to the length of the return stroke plus the distance between the first stop surface and a second stop surface. In this case, the second engagement surface of the piston device engages the stop during the operational stroke at the point when the piston device has travelled over the length of the return stroke. When the operational stroke is longer than the return stroke, in this variant the second engagement surface from that point on picks up the stop and moves it along until the brake pad has reached its braking position, i.e. until the piston device has reached the end of its operational stroke. When the driver or brake related the driver assistance system (such as a brake booster, ABS/ESP system, adaptive cruise control, automated emergency braking) releases the brake, the retraction means move the brake pad back into the retracted position and the piston device is moved over the return stroke. Because the stop has now been moved by the secondary engagement surface, the length of the return stroke is the same as it was before.

In an embodiment of the vehicle brake system according to the invention, the first engagement surface of the piston device is spaced apart from the stop when the piston device is in an intermediate position in the return stroke, an intermediate position in the operational stroke, and at the end of the operational stroke.

In this embodiment, the first engagement surface is only in contact with the stop at the end of the return stroke of the piston device, which coincides with the beginning of the operational stroke of the piston device. As soon as the piston device leaves this position, the first engagement surface no longer engages the stop. This way, the presence of the stop does not influence the motion of the piston device. Therewith, no additional power consumption of the system occurs due to the presence of the stop.

In an embodiment of the vehicle brake system according to the invention, the retractor is adapted to force the first engagement surface of the piston device against the stop with a pre-tensioning force and to maintain this pre-tensioning force while the piston device is at the end of the return stroke.

Making the first engagement surface of the piston device come to bear against the stop under a pre-tensioning force has several advantages. One advantage is that the piston device is biased towards the position at the end of the return stroke and that a threshold force is required to move it out of that position, and therewith to move the brake pad towards any brake disk or other rotatable wheel part with which the vehicle brake system cooperates during use. This reduces the risk of undesired contact between the brake pad and any brake disk or other rotatable wheel part with which the vehicle brake system cooperates during use during normal running of the vehicle, when the brake is not applied.

In addition, many types of retractors have a non-linear part or other unfavorable part in their range of motion. For example, most springs (coil springs as well as Belleville springs) have a part in their range of motion in which the applied force and the resulting deformation do not have a linear relationship. As usually the piston device has to overcome the force of the retractor when it travels through the operational stroke, and the driver senses this force as he applies the brake. It may also be detrimental for the functioning of a brake related driver assistance system (such as a brake booster, ABS/ESP system, adaptive cruise control, automated emergency braking), or make such a system more complicated. If the retractor then has a non-linear part in its range of motion, the driver will perceive this as by variation of the force feedback he gets through the brake pedal.

By making the first engagement surface of the piston device come to bear against the stop under a pre-tensioning force, the range of motion of the retractor that is actually used in the return stroke and in the operational stroke of the piston device will be only a part of a larger full range of motion of the retractor. This allows to select an advantageous part from this full range of motion, for example a part that has a linear relationship between the applied force and the resulting deformation of the retractor. This further increases the predictability of the brake system for the driver and for any brake related driver assistance system (such as a brake booster, ABS/ESP system, adaptive cruise control, automated emergency braking),.

In an embodiment of the vehicle brake system according to the invention, the vehicle brake system further comprises a drive which is adapted to apply a drive force on the piston device in order to move the piston device over the operational stroke. In this embodiment, the retractor is further adapted to apply a retraction force onto the brake pad and/or on the piston device during the return stroke, and the drive force is larger than the retraction force.

This embodiment provides a practical way to achieve that the stop is moved by the piston device only in the direction of the operational stroke and not in the direction of the return stroke.

In a variant of this embodiment, the stop is slidably mounted in a housing, and a static friction force is present between the stop and the housing. In this variant, the static friction force is smaller than the drive force and larger than the retraction force.

The static friction force is the force that needs to be overcome to get the stop sliding within the housing. Once the stop is sliding in the housing, a dynamic friction force is present between the stop and the housing. According to accepted friction theory, the dynamic friction force is normally lower than the static friction force.

The static friction force being smaller than the drive force and larger than the retraction force makes that the drive force can cause the stop to slide within the housing, but the retraction force cannot. This way, the stop can be moved by the piston device in the direction of the operational stroke, but not in the direction of the return stroke.

The housing can for example be mounted to the frame or form an integral part of the frame.

Optionally, the stop is mounted in the housing in a such a way that the stop can be returned to its initial position when a worn brake pad has been replaced by a new brake pad. For example, a sleeve can be arranged between the stop and the housing which allows the stop to slide back to its initial position when sufficient force is applied to the stop.

In an embodiment of the vehicle brake system according to the invention, the vehicle brake system further comprises a locking device to prevent movement of the stop in the direction of the return stroke.

The locking device may for example be or comprise a mechanical device which allows movement in one direction but not in the direction opposite thereto, e.g. by shape locking and/or by force locking. Alternatively or in addition, the locking device may be or comprise a hydraulic, pneumatic, electric and/or magnetic device which allows movement in one direction but not in the direction opposite thereto.

For example, the locking device is or comprises one of the following: a wedge, a double louvre, a linear backstop, a one way freewheel clutch, a rod having one-directional self-locking thread, a flexible seal.

Optionally, the locking device is releasable so that the stop can be returned to its initial position when a worn brake pad has been replaced by a new brake pad.

In an embodiment of the vehicle brake system according to the invention, the retractor is or comprises a spring, a hydraulic device, a pneumatic device a magnetic device, an electric device and/or an electromagnetic device.

If the retractor is a spring, it can for example be a coil spring or a Belleville spring.

If the retractor is a hydraulic device, it for example comprises a hydraulic channel which opens into a hydraulic chamber which is delimited by a piston wall. The piston wall may be part of the piston device comprising the first engagement surface, or the piston wall may be part of a secondary piston device which is present in addition to the piston device which comprises the first engagement surface.

In an embodiment of the vehicle brake system according to the invention, the retractor comprises a plurality of springs, for example a plurality of springs which are arranged in parallel, for example two springs which are parallel to each other or two pairs of springs in which at least the springs that together form a pair are parallel to each other.

In an embodiment of the vehicle brake system according to the invention, the vehicle brake system further comprises a brake pad guide, which is adapted to guide the brake pad in its movement from the retracted position to the braking position and/or vice versa.

For example, the brake pad guide comprises a plurality of mutually parallel guide rods, which are connected to the brake pad and extend through at least a part of the frame.

Optionally, the brake pad guide comprises at least one guide rod, and the retractor comprises at least one spring, and spring extends parallel to and/or coaxial with the guide rod.

In an embodiment of the vehicle brake system according to the invention, the piston device further comprises a second engagement surface. The second engagement surface is adapted to engage the stop at the end of the operational stroke. At the end of the operational stroke of the piston device, the brake pad is in the braking position.

The second engagement surface is arranged at a distance from the first engagement surface.

The second engagement surface allows to further control the length of the operational stroke of the piston independent of the retractor.

Optionally, the distance between the first engagement surface and the second engagement surface is equal to the length of the return stroke. Alternatively, the distance between the first engagement surface and the second engagement surface is equal to the length of the return stroke plus a predetermined run-in allowance. Alternatively, the distance between the first engagement surface and the second engagement surface is equal to the length of the return stroke plus the distance between the location on the stop where the first engagement surface contacts the stop and the location on the stop where the second engagement surface contacts the stop, this distance being measured in the direction of the return stroke.

In this embodiment, the piston device extends into a housing. The housing for example is mounted to or forms part of the frame. The stop comprises a ring having a central annular opening. The ring is friction mounted inside the housing and onto an inner wall of the housing.

A part of the piston device extends through the annular opening of the ring, with the ring being arranged between the first engagement surface of the piston device and the second engagement surface of the piston device.

In this embodiment, the ring comprises a first annular surface which is arranged to engage the first engagement surface of the piston device at the end of the return stroke and a second annular surface on the opposite side of the ring with regard to the first annular surface. The second annular surface is arranged to engage the second engagement surface of the piston device at the end of the operational stroke when the operational stroke is longer than the return stroke.

Optionally, the housing further comprises a hydraulic chamber for accommodating a hydraulic fluid, an inlet port for allowing hydraulic fluid to be supplied to the hydraulic chamber, and an outlet port for allowing discharge of hydraulic fluid from the hydraulic chamber. Instead of an inlet port and an outlet pot, a combined inlet/outlet port may be present, which allows hydraulic fluid to be supplied to the hydraulic chamber as well as allowing discharge of hydraulic fluid from the hydraulic chamber.

Optionally, in this embodiment, the retractor is arranged in the housing. In this case, the retractor is for example a spring which is arranged in the housing, for example in the hydraulic chamber of the housing if such a hydraulic chamber is present.

According to the invention, the piston device further comprises a second engagement surface. The second engagement surface is adapted to engage the stop at the end of the operational stroke. At the end of the operational stroke of the piston device, the brake pad is in the braking position.

The second engagement surface is arranged at a distance from the first engagement surface.

The second engagement surface allows to further control the length of the operational stroke of the piston independent of the retractor.

Optionally, the distance between the first engagement surface and the second engagement surface is equal to the length of the return stroke. Alternatively, the distance between the first engagement surface and the second engagement surface is equal to the length of the return stroke plus a predetermined run-in allowance. Alternatively, the distance between the first engagement surface and the second engagement surface is equal to the length of the return stroke plus the distance between the location on the stop where the first engagement surface contacts the stop and the location on the stop where the second engagement surface contacts the stop, this distance being measured in the direction of the return stroke.

According to the invention, the vehicle brake system further comprises an intermediate element, which intermediate element comprises the stop. The intermediate element is moveably, e.g. slidably, arranged into a housing. The housing for example is mounted to or forms part of the frame.

The intermediate element may help to reduce the risk of dirt, rust and/or other contaminants to reach the first engagement surface, second engagement surface and/or the stop. Accumulation of dirt, rust and/or similar contaminants could inhibit an optimal functioning of the movable stop.

Alternatively or in addition, the intermediate element may facilitate easy assembly of the brake system according to the invention, by allowing pre-assembly of a large part of the system before mounting it to or in the frame.

Optionally, the intermediate element is adapted to move along with the stop.

Optionally, the retractor is arranged between the piston device and the intermediate element. The retractor for example is or comprises a spring and/or a magnet which operates by attracting and/or repelling.

Optionally, a static friction force is present between the intermediate element and the housing. The static friction force is smaller than the drive force and larger than the retraction force. The static friction force is the force that needs to be overcome to get the intermediate element sliding within the housing.

The static friction force being smaller than the drive force and larger than the retraction force makes that the drive force can cause the intermediate element together with the stop, to slide within the housing, but the retraction force cannot. This way, the stop can be moved by the piston device in the direction of the operational stroke, but not in the direction of the return stroke.

Optionally, a sleeve is provided around the intermediate element. The sleeve is fixed to the intermediate element. A static friction force is present between the sleeve and the housing. The static friction force is smaller than the drive force and larger than the retraction force. The static friction force is the force that needs to be overcome to get the sleeve sliding within the housing.

The static friction force being smaller than the drive force and larger than the retraction force makes that the drive force can cause the sleeve, together with the intermediate element and the stop, to slide within the housing, but the retraction force cannot. This way, the stop can be moved by the piston device in the direction of the operational stroke, but not in the direction of the return stroke.

Optionally, the piston device has an outer diameter and a length, and the intermediate element extends along the outer diameter of the piston device over at least a part of the length of the piston device.

Optionally, the intermediate element has an opening in which at least the first engagement surface and the second engagement surface of the piston device are accommodated. Optionally, the intermediate element has an opening in which at least the first engagement surface and the second engagement surface of the piston device are accommodated during the entire operational stroke and/or during the entire return stroke of the piston device, and/or when the brake pad is in the retracted position and/or when the brake pad is in the braking position. Optionally, the piston device comprises a first end facing towards the brake pad and a second end, which is opposite to the first end, and the intermediate element has an opening in which at least the second end of the piston device is accommodated in the opening of the intermediate element.

According to the invention, the intermediate element is cup-shaped and has a central opening, and the at least part of the piston device is accommodated in the central opening.

Optionally, the intermediate element is has a U-shaped cross section and has a central opening which extends in the axial direction of the intermediate direction, and the at least part of the piston device is accommodated in the central opening.

Optionally, the intermediate element is provided with at least one opening to allow hydraulic fluid to pass through.

In an embodiment of the vehicle brake system according to the invention, the vehicle brake system further comprises a rotatable wheel part. In the braking position, the brake pad engages the rotatable wheel part. The rotatable wheel part is for example a brake disk or a rotor of an in-wheel motor.

In an embodiment of the vehicle brake system according to the invention, the piston device comprises a plurality of pistons, each of the pistons being connected to the brake pad. Each of the pistons is moveable over an operational stroke. The plurality of pistons is arranged to move the brake pad from the retracted position into the braking position. At least one of the pistons, or a piston rod which is connected to at least one of the pistons, comprises the first engagement surface.

Optionally, the at least one of the pistons, or the piston rod which is connected to at least one of the pistons, which comprises the first engagement surface, further comprises a second engagement surface adapted to engage the stop at the end of the operational stroke. Optionally, the second engagement surface is arranged at a distance from the first engagement surface, which distance is equal to the length of the return stroke. Optionally, the stop is moveable by the second engagement surface of the piston device in the direction of the operational stroke when the operational stroke is longer than the return stroke. For example, the distance between the first engagement surface and the second engagement surface is equal to the length of the return stroke plus the distance between the location on the stop where the first engagement surface contacts the stop and the location on the stop where the second engagement surface contacts the stop, this distance being measured in the direction of the return stroke.

The invention further pertains to a vehicle, which vehicle comprises:
- a wheel, which is provided with an in-wheel motor, which in-wheel motor comprises a rotor,
- a vehicle brake system according to the invention,
wherein in the braking position the brake pad engages the rotor of the in-wheel motor.

For example, the vehicle brake system is a vehicle brake system in accordance with any of the embodiments of the vehicle brake system according to the invention as described above.

In-wheel motors are generally used in high efficiency vehicles, e.g. electric vehicles, in particular electric vehicles which are at least partly chargeable by solar power. As the vehicle brake system according to the invention reduces the risk that the brake pad is in contact with the rotor of the in-wheel motor when the brake is not applied, the vehicle brake system helps to obtain a good power efficient operation of the vehicle, and therewith contributes to a large range of travel before recharging of the batteries is required.

The invention further pertains to a vehicle,
which vehicle comprises:
   - a wheel, which is provided with a brake disk,
   - a vehicle brake system according to the invention,
wherein in the braking position the brake pad engages the brake disk.

For example, the vehicle brake system is a vehicle brake system in accordance with any of the embodiments of the vehicle brake system according to the invention as described above.

The invention further pertains to a trailer, which comprises a vehicle brake system according to the invention.

For example, the vehicle brake system is a vehicle brake system in accordance with any of the embodiments of the vehicle brake system according to the invention as described above.

The invention will be described in more detail below under reference to the drawing, in which in a non-limiting manner exemplary embodiments of the invention will be shown. The drawing shows in:
Fig. 1: a first embodiment of a vehicle brake system, with the brake pad in the retracted position,
Fig. 2: the vehicle brake system in the embodiment of fig. 1, with the brake pad in the braking position,
Fig. 3: a second embodiment of a vehicle brake system, with the brake pad in the retracted position,
Fig. 4: the vehicle brake system in the embodiment of fig. 3, with the brake pad in the braking position,
Fig. 5: a first embodiment of a vehicle brake system according to the invention, with the brake pad in the retracted position,
Fig. 6 the vehicle brake system in the embodiment of fig. 5, with the brake pad in the braking position,
Fig. 7 shows a second embodiment of a vehicle brake system according to the invention, in the braking position,
Fig. 8 shows a third embodiment of a vehicle brake system, in the braking position,
Fig. 9 shows a fourth embodiment of a vehicle brake system.

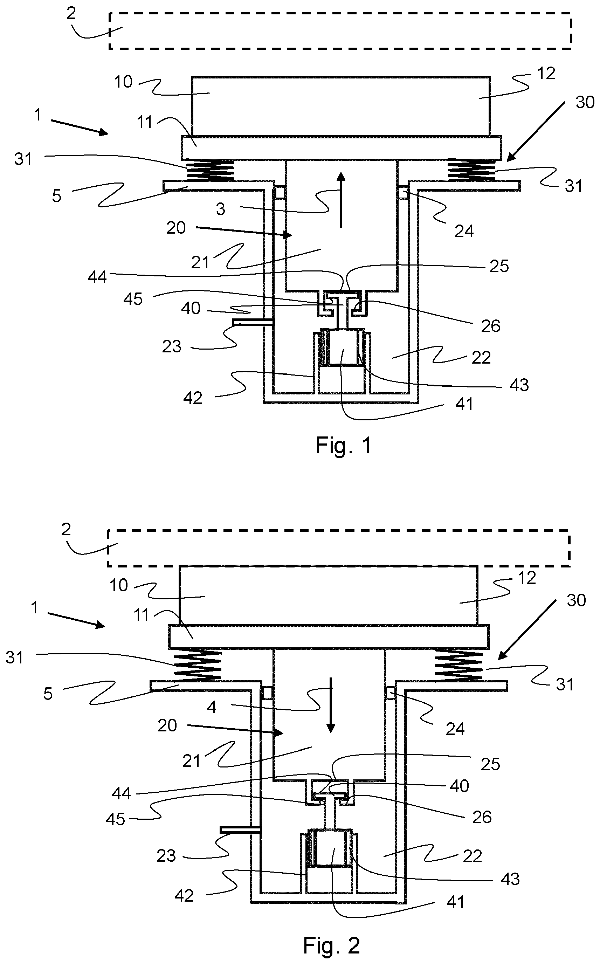

Fig. 1 shows a first embodiment of the vehicle brake system 1. In fig. 1, the brake pad is in the retracted position. Fig. 2 again shows the embodiment of fig. 1, but now with the brake pad in the braking position.

In the embodiment of fig. 1 and fig. 2, the vehicle brake system 1 comprises a frame 5. The frame 5 is for example a brake caliper or a part thereof.

The vehicle brake system 1 of fig. 1 and fig. 2 further comprises a brake pad 10. In this embodiment, the brake pad 10 comprises a brake pad body 12 which is arranged on a brake pad holder 11. The brake pad holder 11 which has a relatively high rigidity, so it can withstand the forces that occur during braking without too much deformation. The brake pad body 12 comprises typical brake pad material.

The brake pad 10 is moveable relative to the frame 5 between a braking position (which is shown in fig. 2) and a retracted position (which is shown in fig. 1).

In the braking position, which is shown in fig. 2, the vehicle brake system 1 is active, so the wheel that is associated with the vehicle brake system 1 is subjected to a braking action. In the braking position, the brake pad 10 is for example positioned to engage a brake disk or other rotatable wheel part which rotates along with the wheel. In fig. 1, the position of a brake disk or other rotatable wheel part of the wheel that is associated with the vehicle brake system 1 is indicated by dashed line 2.

In case an in-wheel electrical motor is used to drive the wheel on which the vehicle brake system 1 is arranged to operate, in the braking position, the brake pad 10 is for example positioned to engage a rotor of the in-wheel motor.

In the retracted position, which is shown in fig. 1, the vehicle brake system 1 is not active, so the wheel that is associated with the vehicle brake system 1 is not subjected to a braking action. In fig. 1, the position of a brake disk or other rotatable wheel part of the wheel that is associated with the vehicle brake system 1 is indicated by dashed line 2.

In the retracted position, the brake pad 10 is at the largest distance from the brake disk or other rotatable wheel part that the brake pad engages when the brake pad is in the braking position. So, if the total distance that the brake pad 10 travels from the braking position away from the brake disk or other rotatable wheel part of the wheel with which the vehicle brake system 1 is associated is referred to as the brake pad stroke, the braking position and the retracted position are located at opposite ends of the brake pad stroke. The brake pad 10 does not travel further away from the brake disk or rotatable wheel part than the retracted position. Any position of the brake pad 10 between the braking position and the retracted position is referred to as an "intermediate position" of the brake pad 10.

The vehicle brake system of fig. 1 and fig. 2 further comprises a piston device 20. In the embodiment of fig. 1 and fig. 2, the piston device 20 is formed by a hydraulic piston 21. Alternatively, a hydraulic piston with a piston rod, a pneumatic piston, a pneumatic piston with a piston rod, a magnetically operated piston, a magnetically operated piston with a piston rod, a piston which is driveable by a linear motor, or a combination of a piston and piston rod which is driven by a linear motor could be applied.

The piston 21 is optionally connected to the brake pad 10. In this embodiment, the piston 21 is attached to the brake pad holder 11. The piston 21 is moveable over an operational stroke to move the brake pad 10 from the retracted position into the braking position. In the embodiment of fig. 1 and fig. 2, the operational stroke of the piston 21 extends parallel or even coaxial with the brake pad stroke. In fig. 1, arrow 3 indicates the direction of the operational stroke. In the embodiment of fig. 1 and fig. 2, the operational stroke of the piston 21 has the same length as the brake pad stroke as long a no wear occurs on the brake pad or on the brake disk or other rotatable wheel part of the wheel with which the vehicle brake system 1 is associated.

The operational stroke of the piston 21 (which in this embodiment forms the piston device 20) has a start point and an end point. If the piston 21 is located somewhere between the start point and the end point of the operational stroke, it is in an intermediate position

The piston 21 comprises a first engagement surface 25.

The vehicle brake system according to fig. 1 and fig. 2 further comprises a retractor 30 which is adapted to move the piston 21 which in this embodiment forms the piston device 20 over a return stroke, thereby moving the brake pad 10 from the braking position into the retracted position. The direction of the return stroke is indicated in fig. 2 by arrow 4 in the embodiment of fig. 1 and fig. 2, the retractor 30 comprises a plurality of springs 31, which are for example coil springs. In this embodiment, the retractor 30 engages the brake pad 10 as the springs 31 engage the brake pad holder 11. Alternatively in or addition, the retractor may engage the piston device 20. Because the springs 31 engage the brake pad holder, the piston 21 is optionally not fixedly connected to the brake pad 10, but only engages the brake pad 10 under the influence of the hydraulic pressure on the piston 21 and/or of the springs 31.

In the embodiment of fig. 1 and fig. 2, the hydraulic piston 21 extends in a hydraulic chamber 22 within the frame 5. The hydraulic chamber 22 can be filled with a hydraulic fluid. An inlet/outlet port 23 is provided which allows hydraulic fluid to be supplied to and discharged from the hydraulic chamber 22. The hydraulic chamber is sealed by piston seal 24. Piston seal 24 can be a rigid seal through which the piston 21 can move back and forth, or it can be a flexible seal of which the inner wall (which is the wall of the seal 24 that contacts the piston 21) at least partly moves along with the piston 21 when the piston 22 is moved over its operational stroke and its return stroke. In case of a flexible seal, the flexible seal may bias the piston 21 towards the end of its return stroke Optionally, such a flexible seal may form part of the retractor 30.

The vehicle brake system according to the invention further comprises a stop 40. This stop 40 is in engagement with the first engagement surface 25 of the piston 21 at the end of the return stroke, so the position the piston 21 is in when the brake pad 10 is in the retracted position. The stop 40 is arranged to prevent movement of the first engagement surface 25 past the stop 40 in the direction of the return stroke.

The stop 40 is moveable by the piston 21 in the direction of the operational stroke of the piston 21, so in the direction of arrow 3 in fig. 1.

In the embodiment of fig. 1 and fig. 2, the hydraulic chamber 22 and the inlet/outlet port 23 form part of a hydraulic drive which is adapted to apply a drive force on the piston 21 that forms the piston device 20 in order to move the piston 21 over the operational stroke. The retractor 30 is adapted to apply a retraction force onto the brake pad 10, and therewith upon the piston 21 during the return stroke. The drive force is larger than the retraction force.

In the embodiment of fig. 1 and fig. 2, the stop 40 comprises a plug 41. The plug 41 is slidably arranged in a plug housing 42. In the embodiment of fig. and fig. 2, the plug 41 and the plug housing 42 are located inside the hydraulic chamber 22. This has the advantage that the stop 40 and the combination of the plug 41 and the plug housing 42 are shielded from dirt, rust and other contamination, which ensures proper functioning.

A static friction force is present between the plug 41 of the stop 40 and the plug housing 42. The static friction force is smaller than the drive force and larger than the retraction force.

The static friction force is the force that needs to be overcome to get the plug 41 of the stop 40 sliding within the plug housing 42.

The static friction force being smaller than the drive force and larger than the retraction force makes that the drive force can cause the plug 41 of the stop 40 to slide within the plug housing 42, but the retraction force cannot. This way, the stop can be moved by the piston 21 in the direction of the operational stroke as indicated by arrow 3 in fig. 1, but not in the direction of the return stroke as indicated by arrow 4 in fig. 2.

The plug housing 42 can for example be mounted to the frame 5 or form an integral part of the frame 5.

In the embodiment of fig. 1 and fig. 2, the stop 40 has a first stop surface 44 and a second stop surface 45. The first stop surface 44 is arranged to engage the first engagement surface 25 of the piston 21 when the piston 21 is at the end of the return stroke. The second stop surface 45 is arranged to engage the second engagement surface 26 of the piston 21 when the piston 21 is at the end of the operational stroke, or when the second engagement surface 26 engages the stop 40 in order to move the stop 40 in the direction of the operational stroke.

Optionally, the way in which the stop is mounted in the housing is such that the stop can be returned to its initial position when a worn brake pad has been replaced by a new brake pad. This can for example be achieved by providing the plug 41 with a sleeve 43 which is in contact with the plug housing 42. The sleeve 43, which forms part of the plug 41 and moves along with the stop 40, allows the stop 40 to slide back to its initial position when sufficient force is applied to the stop 40.

In the embodiment of fig. 1 and fig. 2, the piston 21 that forms the piston device 20 further comprises a second engagement surface 26. The second engagement surface 26 is adapted to engage the stop 40 at the end of the operational stroke, as can be seen in fig. 2. At the end of the operational stroke of the piston 21, the brake pad 10 is in the braking position.

The second engagement surface 26 is arranged at a distance from the first engagement surface 25.

In the embodiment of fig. 1 and fig. 2, the distance between the first engagement surface 25 and the second engagement surface 26 is for example equal to the length of the return stroke or - as is shown in fig. 1 and fig. 2 - the distance between the first engagement surface and the second engagement surface is equal to the length of the return stroke plus the distance between the location on the stop where the first engagement surface contacts the stop and the location on the stop where the second engagement surface contacts the stop, this distance being measured in the direction of the return stroke.

In this embodiment, the stop 40 is moveable by the second engagement surface 26 of the piston 21 in the direction of the operational stroke when the operational stroke is longer than the return stroke.

In the embodiment of fig. 1 and fig. 2, the first engagement surface 25 of the piston 21 that forms the piston device 2 is spaced apart from the stop 40 when the piston device is in an intermediate position in the return stroke, an intermediate position in the operational stroke, and at the end of the operational stroke. The first engagement surface 25 is only in contact with the stop 40 at the end of the return stroke of the piston 21, which coincides with the beginning of the operational stroke of the piston 21. As soon as the piston 21 leaves this position, the first engagement surface 25 no longer engages the stop 40.

In the embodiment of fig. 1 and fig. 2, the retractor 30 is adapted to force the first engagement surface 25 of the piston 21 against the stop 40 with a pre-tensioning force and to maintain this pre-tensioning force while the piston 21 is at the end of the return stroke.

The embodiment of fig. 1 and fig. 2 works as follows. When the vehicle is running without the brake being applied, the vehicle brake system 1 is in the position as shown in fig. 1. The brake pad 10 does not engage a brake disk or other rotatable part of a wheel that is associated with the vehicle brake system 1. Dashed line 2 in fig. 1 indicates the position of the brake disk or other rotatable part of a wheel that is associated with the vehicle brake system 1.

The springs 31 of the retractor 30 force the first engagement surface 25 of the piston 21 against the stop 40. The first engagement surface 25 cannot move past the stop 40, and the force that is applied by the retractor 30 is less than the static friction between the plug 41 of the stop 40 and the plug housing 42. Therefore, the force that is exerted by the retractor is not able to move the stop in the direction of the return stroke, which is indicated by arrow 4 in fig. 2.

When the brake is applied, the pressure in the hydraulic chamber 22 is increased so that a drive force is exerted on the piston 21 and the piston 21 leaves the position that is shown in fig. 1 and moves over its operational stroke into a position in which the brake pad 10 engages the brake disk or other rotatable part of a wheel that is associated with the vehicle brake system 1. When brake pad 10 engages the brake disk or other rotatable part of a wheel that is associated with the vehicle brake system 1, the brake pad 10is in its braking position. This position of the piston 21 and the brake pad 10 is shown in fig. 2.

The springs 31 of the retractor 30 are stretched to an elongated state when the brake pad 10 is in the braking position. The stop 40 engages the second engagement surface 26 of the piston 21.

If wear of the brake pad 10 has occurred, the thickness of the brake pad body 12 has been reduced. As a result, the brake pad 10 will have to travel over a longer distance from the retracted position to reach the braking position in which it engages the brake disk or other rotatable wheel part with which the vehicle brake system cooperates during use. The same happens when the brake disk or other rotatable wheel part with which the vehicle brake system cooperates during use has suffered wear.

In this case, the operational stroke of the piston 21 gets longer than it was before. As soon as the piston 21 reaches the position which previously was the end point of the operational stroke, the second engagement surface 26 of the piston 21 engages the stop 40. However, the piston 21 continues to travel in the direction of the operational stroke until the brake pad 10 engages the brake disk or other rotatable wheel part with which the vehicle brake system cooperates during use. During this continued travel of the piston 21, the piston 21 moves the stop 40 relative to the plug housing 42 in the direction of the operational stroke.

When the brake is released, the pressure in the hydraulic chamber 22 drops and the piston starts its return stroke under the influence of the retractor 30. The brake pad 10 disengages from the brake disk or other rotatable wheel part with which the vehicle brake system cooperates during use. The stop 40 disengages from the second engagement surface 26 of the piston 21.

The piston 21 stops moving in the direction of the return stroke when the first engagement surface 25 of the piston engages the stop 40. The first engagement surface 25 of the piston 21 does not move beyond the stop 40 in the direction of the return stroke.

In case the stop 40 has been moved by the piston 21, in particular by the second engagement surface 26 of the piston 21, the end point of the return stroke is at a different position relative to the frame 5 than it was before the wear of the brake pad 10 and/or the brake disk or other rotatable wheel part with which the vehicle brake system cooperates during use occurred. This makes that the length of the return stroke is kept constant regardless of wear that occurs.

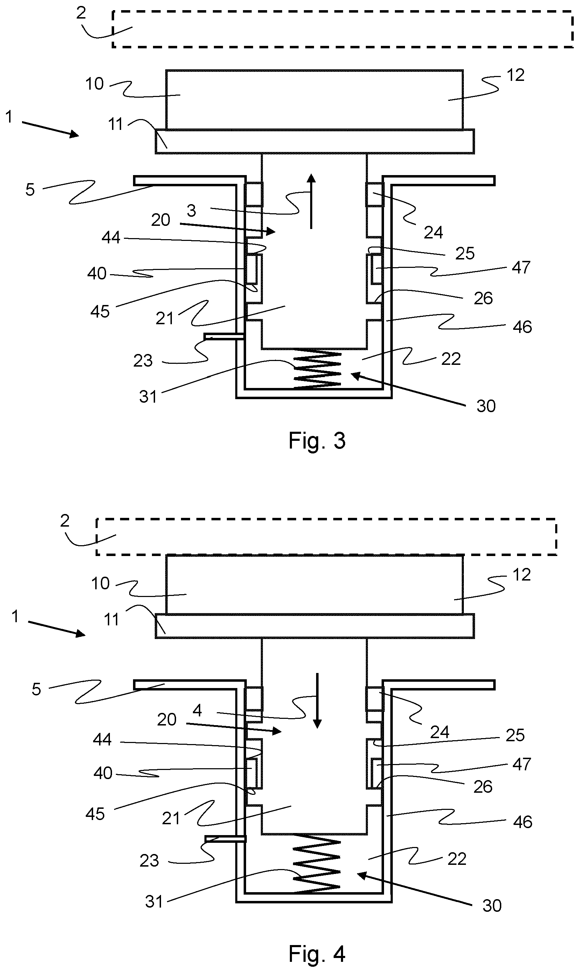

Fig. 3 shows a second embodiment of the vehicle brake system 1. In fig. 3, the brake pad is in the retracted position. Fig. 4 again shows the embodiment of fig. 3, but now with the brake pad in the braking position.

In the embodiment of fig. 3 and fig. 4, the vehicle brake system 1 comprises a frame 5. The frame 5 is for example a brake caliper or a part thereof.

The vehicle brake system 1 of fig. 3 and fig. 4 further comprises a brake pad 10. In this embodiment, the brake pad 10 comprises a brake pad body 12 which is arranged on a brake pad holder 11. The brake pad holder 11 which has a relatively high rigidity, so it can withstand the forces that occur during braking without too much deformation. The brake pad body 12 comprises typical brake pad material.

The brake pad 10 is moveable relative to the frame 5 between a braking position (which is shown in fig. 4) and a retracted position (which is shown in fig. 3).

In the braking position, which is shown in fig. 4, the vehicle brake system 1 is active, so the wheel that is associated with the vehicle brake system 1 is subjected to a braking action. In the braking position, the brake pad 10 is for example positioned to engage a brake disk or other rotatable wheel part which rotates along with the wheel. In fig. 3, the position of a brake disk or other rotatable wheel part of the wheel that is associated with the vehicle brake system 1 is indicated by dashed line 2.

In case an in-wheel electrical motor is used to drive the wheel on which the vehicle brake system 1 is arranged to operate, in the braking position, the brake pad 10 is for example positioned to engage a rotor of the in-wheel motor.

In the retracted position, which is shown in fig. 3, the vehicle brake system 1 is not active, so the wheel that is associated with the vehicle brake system 1 is not subjected to a braking action. In fig. 3, the position of a brake disk or other rotatable wheel part of the wheel that is associated with the vehicle brake system 1 is indicated by dashed line 2.

In the retracted position, the brake pad 10 is at the largest distance from the brake disk or other rotatable wheel part that the brake pad engages when the brake pad is in the braking position. So, if the total distance that the brake pad 10 travels from the braking position away from the brake disk or other rotatable wheel part of the wheel with which the vehicle brake system 1 is associated is referred to as the brake pad stroke, the braking position and the retracted position are located at opposite ends of the brake pad stroke. The brake pad 10 does not travel further away from the brake disk or rotatable wheel part than the retracted position. Any position of the brake pad 10 between the braking position and the retracted position is referred to as an "intermediate position" of the brake pad 10.

The vehicle brake system of fig. 3 and fig. 4 further comprises a piston device 20. In the embodiment of fig. 3 and fig. 4, the piston device 20 is formed by a hydraulic piston 21. Alternatively, a hydraulic piston with a piston rod, a pneumatic piston, a pneumatic piston with a piston rod, a magnetically operated piston, a magnetically operated piston with a piston rod, a piston which is driveable by a linear motor, or a combination of a piston and piston rod which is driven by a linear motor could be applied.

The piston 21 is connected to the brake pad 10. In this embodiment, the piston 21 is attached to the brake pad holder 11. The piston 21 is moveable over an operational stroke to move the brake pad 10 from the retracted position into the braking position. In the embodiment of fig. 3 and fig. 4, the operational stroke of the piston 21 extends parallel or even coaxial with the brake pad stroke. In fig. 3, arrow 3 indicates the direction of the operational stroke. In the embodiment of fig. 3 and fig. 4, the operational stroke of the piston 21 has the same length as the brake pad stroke as long a no wear occurs on the brake pad or on the brake disk or other rotatable wheel part of the wheel with which the vehicle brake system 1 is associated.

The operational stroke of the piston 21 (which in this embodiment forms the piston device 20) has a start point and an end point. If the piston 21 is located somewhere between the start point and the end point of the operational stroke, it is in an intermediate position.

The piston 21 comprises a first engagement surface 25.

The vehicle brake system according to fig. 3 and fig. 4 further comprises a retractor 30 which is adapted to move the piston 21 which in this embodiment forms the piston device 20 over a return stroke, thereby moving the brake pad 10 from the braking position into the retracted position. The direction of the return stroke is indicated in fig. 4 by arrow 4. In the embodiment of fig. 3 and fig. 4, the retractor 30 comprises a spring 31, which is for example a coil spring. In the embodiment of fig. 3 and fig. 4, the spring 31 is arranged inside the frame 5. In this embodiment, the retractor 30 engages the piston device 20. Alternatively or in addition, the retractor may engage the brake pad 10.

In the embodiment of fig. 3 and fig. 4, the hydraulic piston 21 extends in a hydraulic chamber 22 within the frame 5. The hydraulic chamber 22 can be filled with a hydraulic fluid. An inlet/outlet port 23 is provided which allows hydraulic fluid to be supplied to and discharged from the hydraulic chamber 22. The hydraulic chamber is sealed by piston seal 24. Piston seal 24 can be a rigid seal through which the piston 21 can move back and forth, or it can be a flexible seal of which the inner wall (which is the wall of the seal 24 that contacts the piston 21) at least partly moves along with the piston 21 when the piston 22 is moved over its operational stroke and its return stroke. In case of a flexible seal, the flexible seal may bias the piston 21 towards the end of its return stroke Optionally, such a flexible seal may form part of the retractor 30.

The vehicle brake system according to the invention further comprises a stop 40. This stop 40 is in engagement with the first engagement surface 25 of the piston 21 at the end of the return stroke, so the position the piston 21 is in when the brake pad 10 is in the retracted position. The stop 40 is arranged to prevent movement of the first engagement surface 25 past the stop 40 in the direction of the return stroke.

The stop 40 is moveable by the piston 21 in the direction of the operational stroke of the piston 21, so in the direction of arrow 3 in fig. 3.

In the embodiment of fig. 3 and fig. 4, the hydraulic chamber 22 and the inlet/outlet port 23 form part of a hydraulic drive which is adapted to apply a drive force on the piston 21 that forms the piston device 20 in order to move the piston 21 over the operational stroke. The retractor 30 is adapted to apply a retraction force onto the brake pad 10, and therewith upon the piston 21 during the return stroke. The drive force is larger than the retraction force.

In the embodiment of fig. 3 and fig. 4, the piston device 20 (which is formed by piston 21 in this embodiment) extends into a housing 46, which forms part of the frame 5. The stop 40 comprises a ring 47 having a central annular opening. The ring 47 is friction mounted inside the housing 46 and onto an inner wall of the housing 46.

A part of the piston 21 extends through the annular opening of the ring 47, with the ring being arranged between the first engagement surface 25 of the piston 21 and the second engagement surface 26 of the piston 21.

In this embodiment, the ring 47 comprises a first stop surface 44 in the form of an first annular surface, which is arranged to engage the first engagement surface 2 5 of the piston 21 at the end of the return stroke. The ring 47 further comprises second stop surface 45 in the form of a second annular surface on the opposite side of the ring 47 with regard the first annular surface. The second annular surface is arranged to engage the second engagement surface 26 of the piston 21 at the end of the operational stroke when the operational stroke is longer than the return stroke.

In the embodiment of fig. 3 and fig. 4, the ring 47 is slidably arranged in the housing 46.

A static friction force is present between the ring 47 of the stop 40 and the housing 46. The static friction force is smaller than the drive force and larger than the retraction force.

The static friction force is the force that needs to be overcome to get the ring 47 sliding within the housing 46.

The static friction force being smaller than the drive force and larger than the retraction force makes that the drive force can cause the ring 47 of the stop 40 to slide within the housing 46, but the retraction force cannot. This way, the ring 47 of the stop 40 can be moved by the piston 21 in the direction of the operational stroke as indicated by arrow 3 in fig. 3, but not in the direction of the return stroke as indicated by arrow 4 in fig. 4.

Optionally, the way in which the ring 47 of the stop 40 is mounted in the housing 46 is such that the ring 47 of the stop 40 can be returned to its initial position when a worn brake pad has been replaced by a new brake pad. This can for example be achieved by providing the ring 47 with a sleeve which is in contact with the housing 46, similar to what is shown with respect to the sleeve 43 in the embodiment of fig.1 and fig. 2.

In the embodiment of fig. 3 and fig. 4, the piston 21 that forms the piston device 20 further comprises a second engagement surface 26. The second engagement surface 26 is adapted to engage the stop 40 at the end of the operational stroke, as can be seen in fig. 4. At the end of the operational stroke of the piston 21, the brake pad 10 is in the braking position.

The second engagement surface 26 is arranged at a distance from the first engagement surface 25.

In the embodiment of fig. 3 and fig. 4, the distance between the first engagement surface 25 and the second engagement surface 26 is for example equal to the length of the return stroke, or - as is shown in fig. 3 and fig. 4 - the distance between the first engagement surface and the second engagement surface is equal to the length of the return stroke plus the distance between the location on the stop where the first engagement surface contacts the stop and the location on the stop where the second engagement surface contacts the stop, this distance being measured in the direction of the return stroke..

In this embodiment, the stop 40 is moveable by the second engagement surface 26 of the piston 21 in the direction of the operational stroke when the operational stroke is longer than the return stroke.

In the embodiment of fig. 3 and fig. 4, the first engagement surface 25 of the piston 21 that forms the piston device 2 is spaced apart from the stop 40 when the piston device is in an intermediate position in the return stroke, an intermediate position in the operational stroke, and at the end of the operational stroke. The first engagement surface 25 is only in contact with the stop 40 at the end of the return stroke of the piston 21, which coincides with the beginning of the operational stroke of the piston 21. As soon as the piston 21 leaves this position, the first engagement surface 25 no longer engages the stop 40.

In the embodiment of fig. 3 and fig. 4, the retractor 30 is adapted to force the first engagement surface 25 of the piston 21 against the stop 40 with a pre-tensioning force and to maintain this pre-tensioning force while the piston 21 is at the end of the return stroke.

The embodiment of fig. 3 and fig. 4 works as follows. When the vehicle is running without the brake being applied, the vehicle brake system 1 is in the position as shown in fig. 3. The brake pad 10 does not engage a brake disk or other rotatable part of a wheel that is associated with the vehicle brake system 1. Dashed line 2 in fig. 3 indicates the position of the brake disk or other rotatable part of a wheel that is associated with the vehicle brake system 1.

The spring 31 of the retractor 30 forces the first engagement surface 25 of the piston 21 against the stop 40. The first engagement surface 25 cannot move past the stop 40, and the force that is applied by the retractor 30 is less than the static friction between the ring 47 of the stop 40 and the housing 46. Therefore, the force that is exerted by the retractor is not able to move the stop 40 in the direction of the return stroke, which is indicated by arrow 4 in fig. 4.

When the brake is applied, the pressure in the hydraulic chamber 22 is increased so that a drive force is exerted on the piston 21 and the piston 21 leaves the position that is shown in fig. 3 and moves over its operational stroke into a position in which the brake pad 10 engages the brake disk or other rotatable part of a wheel that is associated with the vehicle brake system 1. When brake pad 10 engages the brake disk or other rotatable part of a wheel that is associated with the vehicle brake system 1, the brake pad 10 is in its braking position. This position of the piston 21 and the brake pad 10 is shown in fig. 4.

The spring 31 of the retractor 30 is stretched to an elongated state when the brake pad 10 is in the braking position. The stop 40 engages the second engagement surface 26 of the piston 21.

If wear of the brake pad 10 has occurred, the thickness of the brake pad body 12 has been reduced. As a result, the brake pad 10 will have to travel over a longer distance from the retracted position to reach the braking position in which it engages the brake disk or other rotatable wheel part with which the vehicle brake system cooperates during use. The same happens when the brake disk or other rotatable wheel part with which the vehicle brake system cooperates during use has suffered wear.

In this case, the operational stroke of the piston 21 gets longer than it was before. As soon as the piston 21 reaches the position which previously was the end point of the operational stroke, the second engagement surface 26 of the piston 21 engages the stop 40. However, the piston 21 continues to travel in the direction of the operational stroke until the brake pad 10 engages the brake disk or other rotatable wheel part with which the vehicle brake system cooperates during use. During this continued travel of the piston 21, the piston 21 moves the stop 40 relative to the plug housing 42 in the direction of the operational stroke.

When the brake is released, the pressure in the hydraulic chamber 22 drops and the piston 21 starts its return stroke under the influence of the retractor 30. The brake pad 10 disengages from the brake disk or other rotatable wheel part with which the vehicle brake system cooperates during use. The stop 40 disengages from the second engagement surface 26 of the piston 21.

The piston 21 stops moving in the direction of the return stroke when the first engagement surface 25 of the piston engages the stop 40. The first engagement surface 25 of the piston 21 does not move beyond the stop 40 in the direction of the return stroke.

In case the stop 40 has been moved by the piston 21, in particular by the second engagement surface 26 of the piston 21, the end point of the return stroke is at a different position relative to the frame 5 than it was before the wear of the brake pad 10 and/or the brake disk or other rotatable wheel part with which the vehicle brake system cooperates during use occurred. This makes that the length of the return stroke is kept constant regardless of wear that occurs.

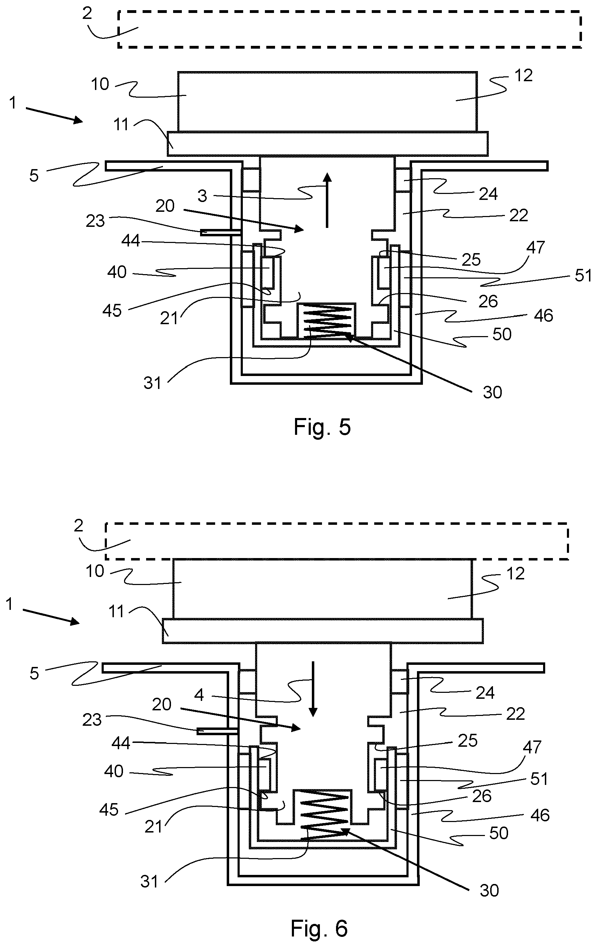

Fig. 5 shows a first embodiment of the vehicle brake system 1 according to the invention. In fig. 5, the brake pad is in the retracted position. Fig. 6 again shows the embodiment of fig. 5, but now with the brake pad in the braking position.

The embodiment of fig. 5 and fig. 6 is a variant of the embodiment of fig. 3 and fig. 4, and operates generally in the same way.

In the embodiment of fig. 5 and fig. 6, an intermediate element 50 is provided. In this embodiment, the ring 47 of the stop 40 is mounted in the intermediate element 50. The intermediate element 50 is moveably, e.g. slidably, arranged into the housing 46, which housing 46 forms part of the frame 5. Optionally, the intermediate element 50 is provided with at least one opening to allow hydraulic fluid to pass through.

The intermediate element 50 moves along with the ring 47 of the stop 40 in case of wear of the brake pad body 12.

A sleeve 51 is provided around the intermediate element 50. The sleeve 51 is fixed to the intermediate element 50. A static friction force is present between the sleeve 51 and the housing 46. The static friction force is smaller than the drive force and larger than the retraction force.

The static friction force is the force that needs to be overcome to get the sleeve 51 sliding within the housing 46.

The static friction force being smaller than the drive force and larger than the retraction force makes that the drive force can cause the sleeve 51, together with the intermediate element 50 and the ring 47 of the stop 40, to slide within the housing 46, but the retraction force cannot. This way, the ring 47 of the stop 40 can be moved by the piston 21 in the direction of the operational stroke as indicated by arrow 3 in fig. 5, but not in the direction of the return stroke as indicated by arrow 4 in fig. 6.

In the embodiment of fig. 5 and 6, optionally the retractor 30 is arranged between the piston 21 and the intermediate element 50.

Optionally, and shown in fig. 5 and fig. 6, the piston device 20 has an outer diameter and a length, and the intermediate element 50 extends along the outer diameter of the piston device 20 over at least a part of the length of the piston device 20.

Optionally, and shown in fig. 5 and fig. 6, the intermediate element 50 has an opening in which at least the first engagement surface 25 and the second engagement surface 26 of the piston device 20 are accommodated. Optionally, and shown in fig. 5 and fig. 6, the intermediate element 50 in this opening at least the first engagement surface 25 and the second engagement surface 26 of the piston device 20 are accommodated during the entire operational stroke and/or during the entire return stroke of the piston device 20, and/or when the brake pad 10 is in the retracted position and/or when the brake pad 10 is in the braking position. Optionally, and shown in fig. 5 and fig. 6, the piston device 20 comprises a first end facing towards the brake pad 10 and a second end, which is opposite to the first end, and the intermediate element 50 has an opening in which at least the second end of the piston device 20 is accommodated in the opening of the intermediate element 50.

As shown in fig. 5 and fig. 6, the intermediate element 50 is cup-shaped and has a central opening, and the at least part of the piston device 20 is accommodated in the central opening.

Optionally, and shown in fig. 5 and fig. 6, the intermediate element 50 is has a U-shaped cross section and has a central opening which extends in the axial direction of the intermediate direction, and the at least part of the piston device 20 is accommodated in the central opening.

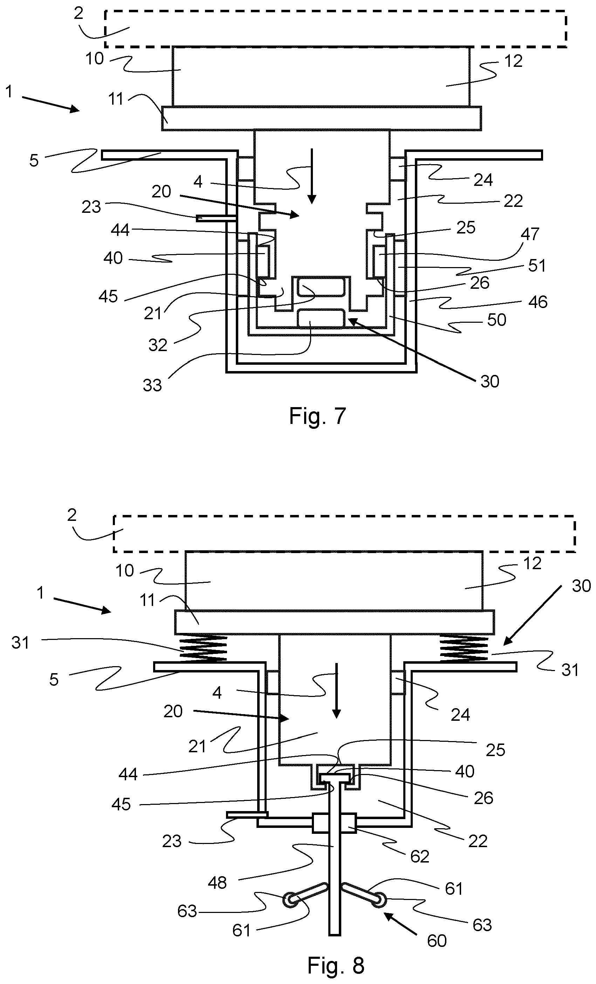

Fig. 7 shows a second embodiment of the vehicle brake system 1 according to the invention. In fig. 7, the brake pad is in the braking position.

The embodiment of fig. 7 is a variant of the embodiment of fig. 5 and fig. 6, and operates generally in the same way.

The main difference between the embodiment of fig. 7 and the embodiment of fig. 5 and fig. 6 is in the retractor 30. While in the embodiment of fig. 5 and fig. 6, the retractor comprises a spring 31, in the embodiment of fig. 7, the retractor comprises two magnets 32, 33.

In the embodiment of fig. 7, the magnets 32, 33 attract each other. When the brake is engaged, the pressure in the hydraulic chamber 22 increases and the drive force which is exerted on the piston 21 overcomes the magnetic attraction force of the magnets 32, 33.

When the brake is released, the hydraulic pressure in the hydraulic chamber 22 decreases. The magnetic attraction force between the magnets 32, 33 moves the piston 21 over its return stroke to disengage the brake pad 10 from the brake disk or other rotatable wheel part of the wheel that is associated with the vehicle brake system.

Fig. 8 shows a third embodiment of a vehicle brake system, in the braking position. The embodiment of fig. 8 is a variant of the embodiment of fig. 1 and fig. 2, and works generally in the same way.

In the embodiment of fig. 8, the stop 40 does not comprise a stop plug 41 which is arranged in a plug housing 42. Instead, the stop 40 comprises a stop rod 48.

In the embodiment of fig. 8, a locking device 60 is provided to prevent movement of the stop in the direction of the return stroke.

In the embodiment of fig. 8, the locking device 60 is a mechanical device which allows movement in one direction but not in the direction opposite thereto, e.g. by shape locking and/or by force locking. Alternatively or in addition, the locking device may be or comprise a hydraulic, pneumatic, electric and/or magnetic device which allows movement in one direction but not in the direction opposite thereto.

In the embodiment of fig. 8, the stop rod 48 extends outside the frame 50. A seal 62 is provided to prevent leakage of hydraulic fluid from the hydraulic chamber 22 while still allowing the stop rod to move relative to the frame 5.

In the embodiment of fig. 8, the locking device 60 comprises two louvres 61. The louvres are moveable, in particular pivotable, around pivots 63. The distance between the pivots is less than twice the length of a louvre 61 plus the diameter of the stop rod 48. In addition, each louvres 61 points towards the piston 21 as seen from its associated pivot 63. This makes that the louvres allow movement of the stop rod 48 in the direction of the operational stork of the piston 21, but not in the direction of the return stroke.

In the embodiment of fig. 8, the locking device 60 is releasable by pivoting the louvres 61 outwards and away from the stop rod 48, out of engagement with the stop rod 48. This way, the stop 40 can be returned to its initial position when a worn brake pad has been replaced by a new brake pad.

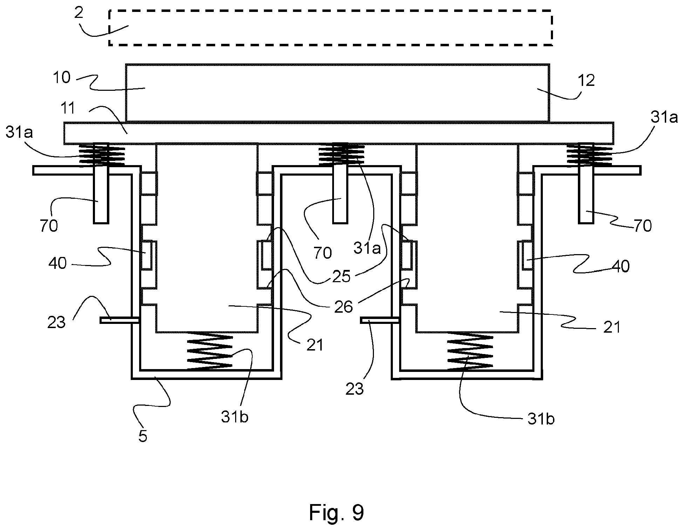

Fig. 9 shows a fourth embodiment of a vehicle brake system in the retracted position. The embodiment of fig. 9 is based on the embodiment of fig. 3 and fig. 4. Alternatively, it can be based on any of the other embodiments described above.

In the embodiment of fig. 9, the piston device comprises a plurality of pistons 21, each of the pistons being connected to the brake pad 10. Each of the pistons i21 s moveable over an operational stroke. The plurality of pistons 21 is arranged to move the brake pad 10 from the retracted position into the braking position. In the embodiment shown in fig. 9, all pistons 21 comprise a first engagement surface 25 and a second engagement surface 26.

In the embodiment of fig. 9, the second engagement surface 26 is arranged at a distance from the first engagement surface 25, which distance is for example equal to the length of the return stroke, or - as is shown in fig. 9 - the distance between the first engagement surface and the second engagement surface is equal to the length of the return stroke plus the distance between the location on the stop where the first engagement surface contacts the stop and the location on the stop where the second engagement surface contacts the stop, this distance being measured in the direction of the return stroke. The stop 40 are moveable by the second engagement surface 26 of the associated piston 21 in the direction of the operational stroke when the operational stroke is longer than the return stroke.

In an embodiment of fig. 9, the vehicle brake system further comprises a brake pad guide, which is adapted to guide the brake pad in its movement from the retracted position to the braking position and/or vice versa. In the embodiment, the brake pad guide comprises a plurality of mutually parallel guide rods 70, which are connected to the brake pad and extend through at least a part of the frame 5.

In the embodiment of fig. 9, the retractor comprises multiple springs 31a, 31b. Alternatively, only one or more springs 31a are present between the brake pad 10 and the frame 5, or only one or more springs 31b are provided which engage on the pistons 21.

In the embodiment of fig. 9, the brake pad guide comprises a plurality of guide rods 70, and springs 31a of the retractor extend parallel to and coaxial with an associated guide rod 70.

In the embodiments of the vehicle brake system described above, in the braking position, the brake pad engages a rotatable wheel part. The rotatable wheel part is for example a brake disk or a rotor of an in-wheel motor. Optionally, the rotatable wheel part forms part of the vehicle brake system.

## Claims

1. Vehicle brake system, which comprises:
- a frame (5),
- a brake pad (10), which is moveable relative to the frame (5) between a braking position and a retracted position,
- a piston device (20) which is moveable over an operational stroke to move the brake pad (10) from the retracted position into the braking position, which piston device (20) comprises a first engagement surface (25),
- a retractor (30) which is adapted to move the piston device (20) over a return stroke, thereby moving the brake pad (10) from the braking position into the retracted position,
- a stop (40) which is in engagement with the first engagement surface (25) of the piston device (20) at the end of the return stroke, which stop (40) is arranged to prevent movement of the first engagement surface (25) past the stop (40) in the direction of the return stroke, and
wherein the stop (40) is moveable by the piston device (20) in the direction of the operational stroke of the piston device (20),
wherein the piston device (20) further comprises a second engagement surface (26) adapted to engage the stop (40) at the end of the operational stroke,
**characterised in that**,
the vehicle brake system further comprises an intermediate element (50), which intermediate element (50) comprises the stop (40),
which intermediate element (50) is moveably arranged into a housing (42, 46),
wherein the intermediate element is cup-shaped and has a central opening, and at least part of the piston device is accommodated in the central opening.

2. Vehicle brake system according to claim 1,
wherein the stop (40) is moveable by the second engagement surface (26) of the piston device (20) in the direction of the operational stroke when the operational stroke is longer than the return stroke.

3. Vehicle brake system according to any of the preceding claims,
wherein the first engagement surface (25) of the piston device (20) is spaced apart from the stop (40) when the piston device (20) is in an intermediate position in the return stroke, an intermediate position in the operational stroke, and at the end of the operational stroke.

4. Vehicle brake system according to any of the preceding claims,
wherein the retractor (30) is adapted to force the first engagement surface (25) of the piston device (20) against the stop (40) with a pre-tensioning force and to maintain this pre-tensioning force while the piston device (20) is at the end of the return stroke.

5. Vehicle brake system according to any of the preceding claims,
wherein the vehicle brake system further comprises a drive which is adapted to apply a drive force on the piston device (20) in order to move the piston device (20) over the operational stroke, and wherein the retractor (30) is adapted to apply a retraction force onto the brake pad (10) and/or on the piston device (20) during the return stroke,
and wherein the drive force is larger than the retraction force.

6. Vehicle brake system according to claim 5,
wherein the stop (40) is slidably mounted in a housing (42, 46), wherein a static friction force is present between the stop (40) and the housing (42, 46),
which static friction force is smaller than the drive force and larger than the retraction force.

7. Vehicle brake system according to any of the preceding claims,
wherein the vehicle brake system further comprises a locking device (60) which is adapted to prevent movement of the stop (40) in the direction of the return stroke,
wherein optionally the locking device (60) is or comprises one of the following: a wedge, a double louvre, a linear backstop, a one way freewheel clutch, a rod having one-directional self-locking thread, a flexible seal.

8. Vehicle brake system according to any of the preceding claims,
wherein the retractor (30) is or comprises a spring, a hydraulic device, a pneumatic device, a magnetic device, an electric device and/or an electromagnetic device.

9. Vehicle brake system according to claim 1,
wherein the piston device (20) extends into a housing (42, 46), and
wherein the stop (40) comprises a ring (47) having a central annular opening, which ring is friction mounted inside the housing (46) and onto an inner wall of the housing (46),
wherein a part of the piston device (20) extends through the annular opening of the ring (47), with the ring (47) being arranged between the first engagement surface (25) of the piston device (20) and the second engagement surface (26) of the piston device (20),
wherein the ring (47) comprises a first annular surface which is arranged to engage the first engagement surface (25) of the piston device (20) at the end of the return stroke and a second annular surface on the opposite side of the ring with regard the first annular surface, which second annular surface is arranged to engage the second engagement surface (26) of the piston device (20) at the end of the operational stroke when the operational stroke is longer than the return stroke.

10. Vehicle brake system according to claim 9,
wherein the retractor (30) is arranged in the housing (46).

11. Vehicle brake system according to claim 1,
wherein the retractor (30) is arranged between the piston device (20) and the intermediate element (50).

12. Vehicle brake system according to any of the preceding claims,
wherein the vehicle brake system further comprises a rotatable wheel part, and wherein in the braking position the brake pad (10) engages the rotatable wheel part.

13. Vehicle,
which vehicle comprises:
- a wheel which is provided with an in-wheel motor, which in-wheel motor comprises a rotor,
- a vehicle brake system according to any of the claims 1-11,
wherein in the braking position the brake pad (10) engages the rotor of the in-wheel motor.

14. Vehicle,
which vehicle comprises:
- a wheel which is provided with a brake disk,
- a vehicle brake system according to any of the claims 1-11,
wherein in the braking position the brake pad (10) engages the brake disk.

15. Trailer which comprises a vehicle brake system according to any of the claims 1-12.

## Patentansprüche

1. Fahrzeugbremssystem, Folgendes umfassend:
- einen Rahmen (5),
- einen Bremsbelag (10), der in Bezug zum Rahmen (5) zwischen einer Bremsposition und einer zurückgezogenen Position beweglich ist,
- eine Kolbenvorrichtung (20), die über einen Betriebshub beweglich ist, um den Bremsbelag (10) von der zurückgezogenen Position in die Bremsposition zu bewegen, wobei der Kolben (20) eine erste Eingriffsfläche (25) umfasst,
- einen Retraktor (30), der dazu eingerichtet ist, die Kolbenvorrichtung (20) über einen Rückführungshub zu bewegen, wobei der Bremsbelag (10) von der Bremsposition in die zurückgezogene Position bewegt wird,
- einen Anschlag (40), der am Ende des Rückführungshubs in die erste Eingriffsfläche (25) der Kolbenvorrichtung (20) eingreift, wobei der Anschlag (40) dazu angeordnet ist, die Bewegung der ersten Eingriffsfläche (25) in Richtung des Rückführungshubs am Anschlag (40) vorbei zu verhindern, und
wobei der Anschlag (40) durch die Kolbenvorrichtung (20) in Richtung des Betriebshubs der Kolbenvorrichtung (20) beweglich ist,
wobei die Kolbenvorrichtung (20) ferner eine zweite Eingriffsfläche (26) umfasst, die dazu eingerichtet ist, am Ende des Betriebshubs in den Anschlag (40) einzugreifen,
**dadurch gekennzeichnet, dass**
das Fahrzeugbremssystem ferner ein Zwischenelement (50) umfasst, wobei das Zwischenelement (50) den Anschlag (40) umfasst,
wobei das Zwischenelement (50) in ein Gehäuse (42, 46) beweglich angeordnet ist,
wobei das Zwischenelement becherförmig ist und eine mittige Öffnung aufweist und wobei zumindest ein Teil der Kolbenvorrichtung in der mittigen Öffnung aufgenommen ist.

2. Fahrzeugbremssystem nach Anspruch 1,
wobei der Anschlag (40) von der zweiten Eingriffsfläche (26) der Kolbenvorrichtung (20) in Richtung des Betriebshubs beweglich ist, wenn der Betriebshub länger ist als der Rückführungshub.

3. Fahrzeugbremssystem nach einem der vorstehenden Ansprüche,
wobei die erste Eingriffsfläche (25) der Kolbenvorrichtung (20) vom Anschlag (40) beabstandet ist, wenn sich die Kolbenvorrichtung (20) in einer Zwischenposition im Rückführungshub, einer Zwischenposition im Betriebshub und am Ende des Betriebshubs befindet.

4. Fahrzeugbremssystem nach einem der vorstehenden Ansprüche,
wobei der Retraktor (30) dazu eingerichtet ist, die erste Eingriffsfläche (25) der Kolbenvorrichtung (20) mit einer Vorspannungskraft gegen den Anschlag (40) zu drücken und die Vorspannungskraft zu halten, während sich die Kolbenvorrichtung (20) am Ende des Rückführungshubs befindet.

5. Fahrzeugbremssystem nach einem der vorstehenden Ansprüche,
wobei das Fahrzeugbremssystem ferner einen Antrieb umfasst, der dazu eingerichtet ist, eine Antriebskraft auf die Kolbenvorrichtung (20) aufzubringen, um die Kolbenvorrichtung (20) über den Betriebshub zu bewegen, und wobei der Retraktor (30) dazu eingerichtet ist, während des Rückführungshubs eine Rückziehkraft auf den Bremsbelag (10) und/oder die Kolbenvorrichtung (20) aufzubringen, und wobei die Antriebskraft größer ist als die Rückziehkraft.

6. Fahrzeugbremssystem nach Anspruch 5,
wobei der Anschlag (40) verschiebbar in einem Gehäuse (42, 46) montiert ist, wobei eine Haftreibungskraft zwischen dem Anschlag (40) und dem Gehäuse (42, 46) vorhanden ist, wobei die Haftreibungskraft kleiner ist als die Antriebskraft und größer ist als die Rückziehkraft.

7. Fahrzeugbremssystem nach einem der vorstehenden Ansprüche,
wobei das Fahrzeugbremssystem ferner eine Sperrvorrichtung (60) umfasst, die dazu eingerichtet ist, die Bewegung des Anschlags (40) in Richtung des Rückführungshubs zu verhindern,
wobei die Sperrvorrichtung (60) optional eines der folgenden Elemente ist oder umfasst: ein/en Keil, eine Doppellamelle, eine lineare Rücklaufsperre, eine Freilaufkupplung, eine Stange mit einem unidirektionalen Sperrgewinde und eine flexible Dichtung.

8. Fahrzeugbremssystem nach einem der vorstehenden Ansprüche,
wobei der Retraktor (30) eine Feder, eine Hydraulikvorrichtung, eine Pneumatikvorrichtung, eine Magnetvorrichtung, eine Elektrovorrichtung und/oder eine elektromagnetische Vorrichtung ist oder umfasst.

9. Fahrzeugbremssystem nach Anspruch 1,
wobei sich die Kolbenvorrichtung (20) in ein Gehäuse (42, 46) erstreckt und wobei der Anschlag (40) einen Ring (47) mit einer mittigen ringförmigen Öffnung umfasst, wobei der Ring im Gehäuse (46) und an einer Innenwand des Gehäuses (46) reibschlüssig montiert ist,
wobei sich ein Teil der Kolbenvorrichtung (20) durch die ringförmige Öffnung des Rings (47) erstreckt, wobei der Ring (47) zwischen der ersten Eingriffsfläche (25) der Kolbenvorrichtung (20) und der zweiten Eingriffsfläche (26) der Kolbenvorrichtung (20) angeordnet ist,
wobei der Ring (47) eine erste ringförmige Fläche, die dazu angeordnet ist, am Ende des Rückführungshubs in die erste Eingriffsfläche (25) der Kolbenvorrichtung (20) einzugreifen, und eine zweite ringförmige Fläche auf der entgegengesetzten Seite des Rings bezüglich der ersten ringförmigen Fläche umfasst, wobei die zweite ringförmige Fläche dazu angeordnet ist, am Ende des Betriebshubs, wenn der Betriebshub länger ist als der Rückführungshub, in die zweite Eingriffsfläche (26) der Kolbenvorrichtung (20) einzugreifen.

10. Fahrzeugbremssystem nach Anspruch 9,
wobei der Retraktor (30) im Gehäuse (46) angeordnet ist.

11. Fahrzeugbremssystem nach Anspruch 1,
wobei der Retraktor (30) zwischen der Kolbenvorrichtung (20) und dem Zwischenelement (50) angeordnet ist.

12. Fahrzeugbremssystem nach einem der vorstehenden Ansprüche,
wobei das Fahrzeugbremssystem ferner einen drehbaren Radteil umfasst und wobei der Bremsbelag (10) in der Bremsposition in den drehbaren Radteil eingreift.

13. Fahrzeug,
wobei das Fahrzeug Folgendes umfasst:
- ein Rad, das mit einem Radnabenmotor versehen ist, wobei der Radnabenmotor einen Rotor umfasst,
- ein Fahrzeugbremssystem nach einem der Ansprüche 1-11,
wobei der Bremsbelag (10) in der Bremsposition in den Rotor des Radnabenmotors eingreift.

14. Fahrzeug,
wobei das Fahrzeug Folgendes umfasst:
- ein Rad, das mit einer Bremsscheibe versehen ist,
- ein Fahrzeugbremssystem nach einem der Ansprüche 1-11,
wobei der Bremsbelag (10) in der Bremsposition in die Bremsscheibe eingreift.

15. Anhänger, der ein Fahrzeugbremssystem nach einem der Ansprüche 1-12 umfasst.

## Revendications

1. Système de frein de véhicule, qui comprend :
- un support (5),
- une plaquette de frein (10), qui est déplaçable relativement au support (5) entre une position de freinage et une position rétractée,
- un dispositif de piston (20) qui est déplaçable sur une course opérante pour déplacer la plaquette de frein (10) de la position rétractée à la position de freinage, ledit dispositif de piston (20) comprenant une première surface de mise en prise (25),
- un moyen de rétraction (30) qui est propre à déplacer le dispositif de piston (20) sur une course de retour, de façon à déplacer ainsi la plaquette de frein (10) de la position de freinage à la position rétractée,
- une butée (40) qui est en prise avec la première surface de mise en prise (25) du dispositif de piston (20) à la fin de la course de retour, ladite butée (40) étant conçue pour empêcher un déplacement de la première surface de mise en prise (25) au-delà de la butée (40) dans la direction de la course de retour, et
la butée (40) étant déplaçable par le dispositif de piston (20) dans la direction de la course opérante du dispositif de piston (20),
le dispositif de piston (20) comprenant, en outre, une seconde surface de mise en prise (26) propre à entrer en prise avec la butée (40) à la fin de la course opérante,
**caractérisé en ce que**
le système de frein de véhicule comprend, en outre, un élément intermédiaire (50), ledit élément intermédiaire (50) comprenant la butée (40), ledit élément intermédiaire (50) étant disposé de manière déplaçable dans un logement (42, 46),
l'élément intermédiaire étant en forme de coupelle et comportant une ouverture centrale, et au moins une partie du dispositif de piston étant logée dans l'ouverture centrale.

2. Système de frein de véhicule selon la revendication 1,
dans lequel la butée (40) est déplaçable par la seconde surface de mise en prise (26) du dispositif de piston (20) dans la direction de la course opérante lorsque la course opérante est plus longue que la course de retour.

3. Système de frein de véhicule selon l'une quelconque des revendications précédentes,
dans lequel la première surface de mise en prise (25) du dispositif de piston (20) est espacée de la butée (40) lorsque le dispositif de piston (20) se trouve dans une position intermédiaire dans la course de retour, une position intermédiaire dans la course opérante, et à la fin de la course opérante.

4. Système de frein de véhicule selon l'une quelconque des revendications précédentes,
dans lequel le moyen de rétraction (30) est propre à mettre la première surface de mise en prise (25) du dispositif de piston (20) en appui contre la butée (40) avec une force de pré-sollicitation et à maintenir cette force de pré-sollicitation pendant que le dispositif de piston (20) se trouve à la fin de la course de retour.

5. Système de frein de véhicule selon l'une quelconque des revendications précédentes,
le système de frein de véhicule comprenant, en outre, un moyen d'entraînement qui est propre à appliquer une force d'entraînement au dispositif de piston (20) afin de déplacer le dispositif de piston (20) sur la course opérante, et dans lequel le moyen de rétraction (30) est propre à appliquer une force de rétraction à la plaquette de frein (10) et/ou au dispositif de piston (20) durant la course de retour,
et dans lequel la force d'entraînement est supérieure à la force de rétraction.

6. Système de frein de véhicule selon la revendication 5,
dans lequel la butée (40) est adaptée à coulissement dans un logement (42, 46), une force de frottement statique existant entre la butée (40) et le logement (42, 46), ladite force de frottement statique étant inférieure à la force d'entraînement et supérieure à la force de rétraction.

7. Système de frein de véhicule selon l'une quelconque des revendications précédentes,
le système de frein de véhicule comprenant, en outre, un dispositif de blocage (60) qui est propre à empêcher un déplacement de la butée (40) dans la direction de la course de retour,
dans lequel, éventuellement, le dispositif de blocage (60) est ou comprend un des éléments suivants : une cale, une paire de lames, une butée linéaire, un embrayage unidirectionnel de type roue libre, une tige comportant un filetage unidirectionnel autobloquant, un joint flexible.

8. Système de frein de véhicule selon l'une quelconque des revendications précédentes,
dans lequel le moyen de rétraction (30) est ou comprend un ressort, un dispositif hydraulique, un dispositif pneumatique, un dispositif magnétique, un dispositif électrique et/ou un dispositif électromagnétique.

9. Système de frein de véhicule selon la revendication 1,
dans lequel le dispositif de piston (20) s'étend dans un logement (42, 46) et dans lequel la butée (40) comprend une bague (47) comportant une ouverture centrale annulaire, ladite bague étant adaptée à frottement dans le logement (46) et sur une paroi intérieure du logement (46),
dans lequel une partie du dispositif de piston (20) s'étend à travers l'ouverture annulaire de la bague (47), la bague (47) étant disposée entre la première surface de mise en prise (25) du dispositif de piston (20) et la seconde surface de mise en prise (26) du dispositif de piston (20),
dans lequel la bague (47) comprend une première surface annulaire qui est conçue pour entrer en prise avec la première surface de mise en prise (25) du dispositif de piston (20) à la fin de la course de retour et une seconde surface annulaire sur le côté opposé de la bague par rapport à la première surface annulaire, ladite seconde surface annulaire étant conçue pour entrer en prise avec la seconde surface de mise en prise (26) du dispositif de piston (20) à la fin de la course opérante lorsque la course opérante est plus longue que la course de retour.

10. Système de frein de véhicule selon la revendication 9,
dans lequel le moyen de rétraction (30) est disposé dans le logement (46).

11. Système de frein de véhicule selon la revendication 1,
dans lequel le moyen de rétraction (30) est disposé entre le dispositif de piston (20) et l'élément intermédiaire (50).

12. Système de frein de véhicule selon l'une quelconque des revendications précédentes,
le système de frein de véhicule comprenant, en outre, une pièce de roue rotative, et dans lequel, dans la position de freinage, la plaquette de frein (10) entre en prise avec la pièce de roue rotative.

13. Véhicule,
ledit véhicule comprenant :
- une roue qui est pourvue d'un moteur-roue, ledit moteur-roue comprenant un rotor,
- un système de frein de véhicule selon l'une quelconque des revendications 1 à 11,
dans lequel, dans la position de freinage, la plaquette de frein (10) entre en prise avec le rotor du moteur-roue.

14. Véhicule,
ledit véhicule comprenant :
- une roue qui est pourvue d'un disque de frein,
- un système de frein de véhicule selon l'une quelconque des revendications 1 à 11,
dans lequel, dans la position de freinage, la plaquette de frein (10) entre en prise avec le disque de frein.

15. Remorque qui comprend un système de frein de véhicule selon l'une quelconque des revendications 1 à 12.
